Europäisches Patentamt

European Patent Office

Office européen des brevets

(11) Veröffentlichungsnummer: **0 151 933**

**A2**

(12) # EUROPÄISCHE PATENTANMELDUNG

(21) Anmeldenummer: 85100227.9

(22) Anmeldetag: 11.01.85

(51) Int. Cl.⁴: **F 28 D 7/10**
**B 01 J 3/00**

(30) Priorität: 08.02.84 DE 3404374

(43) Veröffentlichungstag der Anmeldung:
21.08.85 Patentblatt 85/34

(84) Benannte Vertragsstaaten:
BE FR GB NL SE

(71) Anmelder: W. Schmidt GmbH & Co. KG
Pforzheimer Strasse 46
D-7518 Bretten(DE)

(72) Erfinder: Zitzmann, Hubertus, Dipl.-Ing.
Breslauer Strasse 16
D-7518 Bretten(DE)

(74) Vertreter: Brommer, Hans Joachim, Dr.-Ing. et al,
Patentanwälte Dipl.-Ing. R. Lemcke Dr.-Ing. H.J.
Brommer Amalienstrasse 28 Postfach 4026
D-7500 Karlsruhe 1(DE)

(54) Spiralwärmetauscher.

(57) Die Erfindung betrifft einen Spiralwärmetauscher für unter hohem Druck stehende Medien und für den Einbau in Reaktoren. Dabei fungiert der zylindrische Außenmantel der Blechspirale zugleich als Behälterwand, so daß der Wärmetauscher nicht dem hohen Absolutdruck der Medien ausgesetzt ist. Außerdem sind beidseits der Blechspiralen Abdeckbleche vorgesehen, die bewirken, daß das axial zu- und abgeführte Medium die Spirale ebenfalls in Umfangsrichtung durchströmt.

./...

FIG.1

PATENTANWÄLTE
**DIPL.-ING. R. LEMCKE**
**DR.- ING. H. J. BROMMER**
AMALIENSTRASSE 28
7500 KARLSRUHE 1
TEL.: 0721 / 28778-9

0151933

W. Schmidt GmbH & Co. KG
Pforzheimer Straße 46
7518 Bretten

## Spiralwärmetauscher

Die Erfindung betrifft einen Spiralwärmetauscher, insbesondere für unter hohem Druck stehende Medien und für den Einbau in Reaktoren, bestehend aus Blechspiralen, die zumindest zwei spiralförmige Strömungskanäle für die wärmetauschenden Medien bilden und zwischen stirnseitigen, abnehmbaren Abdeckblechen angeordnet sind, wobei die Abdeckbleche über Stützrippen an die Blechspiralen angedrückt sind und an der einen bzw. der anderen Stirnseite axiale Ein- bzw. Austrittsöffnungen für das eine Medium, insbesondere das Produkt aufweisen, während das andere Medium, insbesondere das Heiz- oder Kühlmedium, radial in seinen spiralförmigen Strömungskanal ein- bzw. aus ihm abgeleitet wird.

Soweit Spiralwärmetauscher in Apparaten, insbesondere Reaktoren für Chemieanlagen, eingebaut sind, erfolgt dies stets in der Weise, daß das eine Medium die Spirale in axialer, das andere Medium die Spirale in Umfangsrichtung durchströmt. Diese sog. Kreuzstromführung hat den Nachteil, daß die Querschnittsfläche für die Strömung in axialer Richtung im Vergleich zu der spiralförmigen Spaltströmung außerordentlich groß ist, was zur Folge hat, daß sich in der axialen Strömung sehr geringe Strömungsgeschwindigkeiten ergeben. Diese geringen Strömungsgeschwindigkeiten führen zu einer niedrigen Wärmeübergangszahl. Dadurch wird selbst bei einer hohen Wärmeübergangszahl an der anderen Wandseite die für die Wärmeübertragung insgesamt repräsentative Wärmedurchgangszahl nachhaltig verringert.

Unabhängig davon ist die Kreuzstromführung mitunter auch aus wärmetechnischen Gründen unerwünscht. Denn zwischen den wärmetauschenden Medien ergeben sich starke Unterschiede im Temperaturgradient.

Man hat diese Nachteile dadurch zu vermeiden versucht, daß der Wärmetauscher außerhalb des Reaktors untergebracht wurde und das Produkt von einer Zirkulationspumpe umgewälzt wurde. Diese Lösung ist jedoch aufwendig. Insbesondere wenn das Produkt unter einem höheren Druck von beispielsweise 30 bis 40 bar steht, wie es bei vielen Hydrierungsreaktionen der Fall ist, muß der Wärmetauscher außerordentlich stabil ausgeführt werden, um die notwendige Druckfestigkeit sicherzustellen.

Hiervon ausgehend, liegt die Aufgabe der vorliegenden Erfindung darin, einen Spiralwärmetauscher der eingangs beschriebenen Art dahingehend zu verbessern, daß er ohne nennenswerten Aufwand auch für sehr hohe Betriebsdrücke geeignet ist und daß er sich gleichzeitig durch günstige Strömungsführung auszeichnet. Dabei soll der Wärmetauscher zu Inspektionszwecken leicht zugänglich bleiben.

Diese Aufgabe wird erfindungsgemäß dadurch gelöst, daß der zylindrische Außenmantel der Spiralen über die beiderseitigen Abdeckbleche radial nach innen gezogen ist und einen den Wärmetauscher allseits umgebenden, druckfesten Behälter bildet und daß das eine Abdeckblech am radial äußeren Ende, das andere Abdeckblech am radial inneren Ende des einen Strömungskanals Ein- oder Austrittsöffnungen aufweist.

Durch die erfindungsgemäße Gestaltung ergibt sich zum einen der Vorteil, daß die beiderseitigen Abdeckbleche der Wärmetauscherspirale nicht mehr dem Absolutdruck der wärmetauschenden Medien ausgesetzt sind, wie dies bei den bisherigen Konstruktionen der Fall ist. Vielmehr brauchen die Abdeckbleche hier lediglich noch den Differenzdruck zwischen Eintritt und Austritt der Strömung aufzunehmen. Dieser Differenzdruck beträgt in der Praxis höchstens 1 bar und ist dadurch völlig unproblematisch. Ein Aufbeulen der stirnseitigen Abdeckbleche, das bei den herkömmlichen Bauarten aufgrund der hohen Druckbeanspruchung unvermeidlich ist und zum Strömungskurzschluß und ver-

0151933

minderter Wärmeübertragungsleistung führt, ist zuverlässig beseitigt.

Da die Abdeckbleche und insbesondere ihre Montage nicht
mehr auf die Erfordernisse einer hohen Druckbeanspruchung
hin augerichtet zu sein brauchen, können sie als in einfacher Weise abnehmbare Elemente ausgebildet sein, um die
Strömungskanäle von außen zu inspizieren und ggf. zu reinigen.

Zum anderen erlauben die Abdeckbleche auch eine günstigere
Strömungsführung. Denn durch den Versatz zwischen Eintritts- und Austrittsöffnung wird auch das axial zugeführte
Medium gezwungen, die Spirale mit entsprechend höheren
Geschwindigkeiten in Umfangsrichtung zu durchströmen,
so daß auch hier hohe Wärmeübergangswerte erzielt werden.
Je nach der anfallenden Produktmenge können durch entsprechende Anzahl von Blechspiralen ein oder mehrere
parallelgeschaltete Strömungskanäle zur Verfügung gestellt
werden.

Die Erfindung beruht also einerseits auf einer Trennung
der Dichtfunktion und der Druckabstützung, indem hierfür
jeweils verschiedene Bauteile verwendet werden, und andererseits auf einem radialen Versatz der Ein- und Austrittsöffnungen in den Abdeckblechen, so daß im Wärmetauscher kein Kreuzstrom, sondern stattdessen Gleich-
oder vorzugsweise Gegenstrom herrscht. Schließlich kann der den Wärmetauscher umgebende druckfeste Behälter zugleich als Reaktor fungieren, in dem bestimmte chemische Prozesse ablaufen.

In Weiterbildung des Erfindungsgedankens empfiehlt es sich, daß die Blechspiralen nur an ihren radial äußeren und inneren Rändern an dem zylindrischen Außenmantel bzw. einem zylindrischen Innenmantel verschweißt sind, während sie im übrigen nur axial mit den beiden Abdeckblechen verklemmt sind, also in radialer und in Umfangsrichtung ausweichen können. Dadurch ist sichergestellt, daß sich aufgrund der mitunter außerordentlich hohen Temperaturdifferenzen zwischen den wärmetauschenden Medien keine gefährlichen Spannungen in den wärmetauschenden Zwischenwänden aufbauen können.

Theoretisch ist es möglich, beide Strömungskanäle des Wärmetauschers in axialer Richtung durch die stirnseits anliegenden Abdeckbleche zu begrenzen.  In der Praxis empfiehlt es sich jedoch, eine unter allen Umständen hermetische Abtrennung der wärmetauschenden Strömungskanäle sicherzustellen. Hierzu sind zweckmäßig die Blechwickel längs des einen Strömungskanales an ihren axialen Rändern miteinander verschweißt, etwa unter Zwischenlage einer den Spalt zwischen den Blechspiralen überbrückenden Drahtspirale. Vorzugsweise verwendet man hierfür den Strömungskanal für das Heiz- oder Kühlmedium, damit der vom Produkt durchflossene Strömungskanal frei zugänglich bleibt und gut zu reinigen ist.

Damit die Abdeckbleche zumindest an der einen Stirnseite leicht abgenommen werden können, empfiehlt es sich, daß sie aus in Umfangsrichtung aufeinanderfolgenden Kreissektoren bestehen, die an ihren radial verlaufenden Rändern hochgebogen und mit den strahlenförmig angeordneten Stützrippen verschraubt sind, während die Stützrippen ihrerseits an den zylindrischen Außen- bzw. Innenmantel angeschweißt sind.

Weitere Merkmale und Vorteile der Erfindung ergeben sich aus der nachfolgenden Beschreibung eines Ausführungsbeispieles anhand der Zeichnung; dabei zeigt:

Fig. 1 einen Axialschnitt durch den mit einem Reaktor kombinierten Wärmetauscher;

Fig. 2 eine Draufsicht in axialer Richtung und

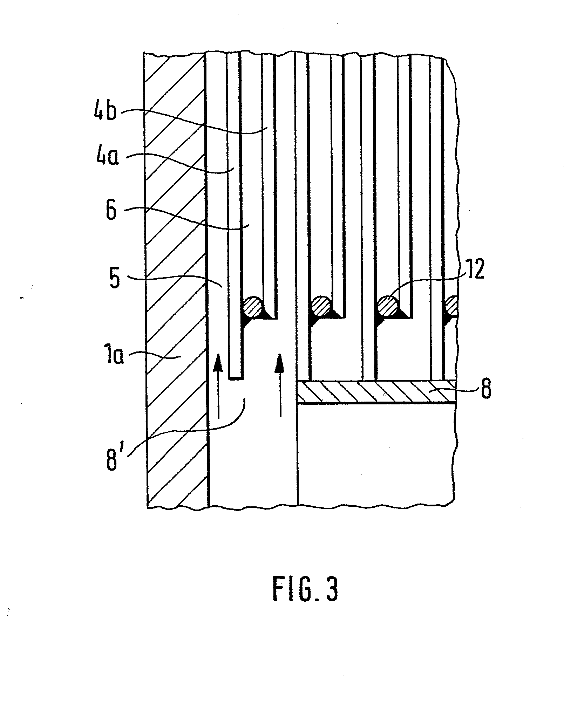

Fig. 3 eine vergrößerte Darstellung des produktseitigen Eintrittsbereiches.

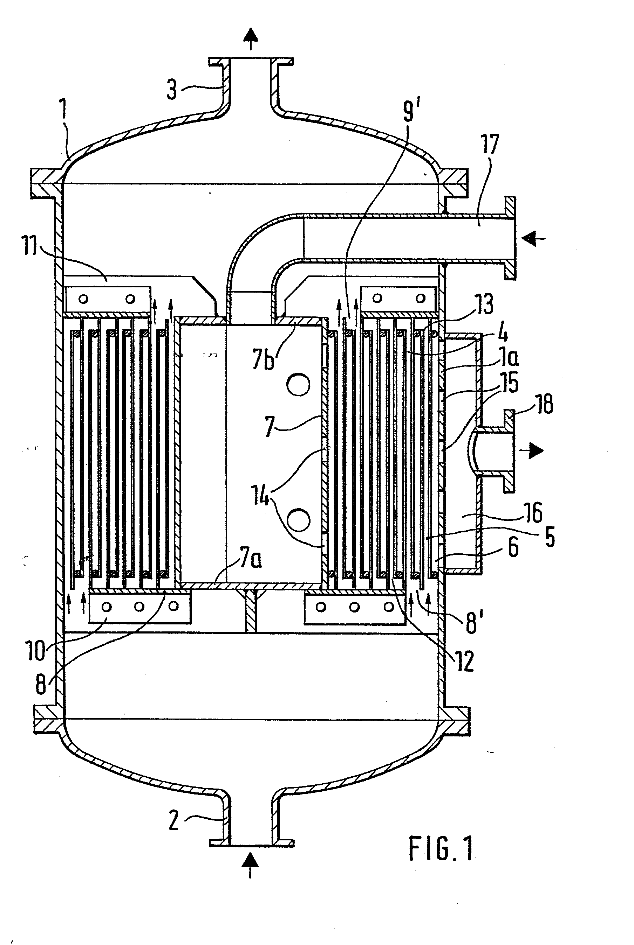

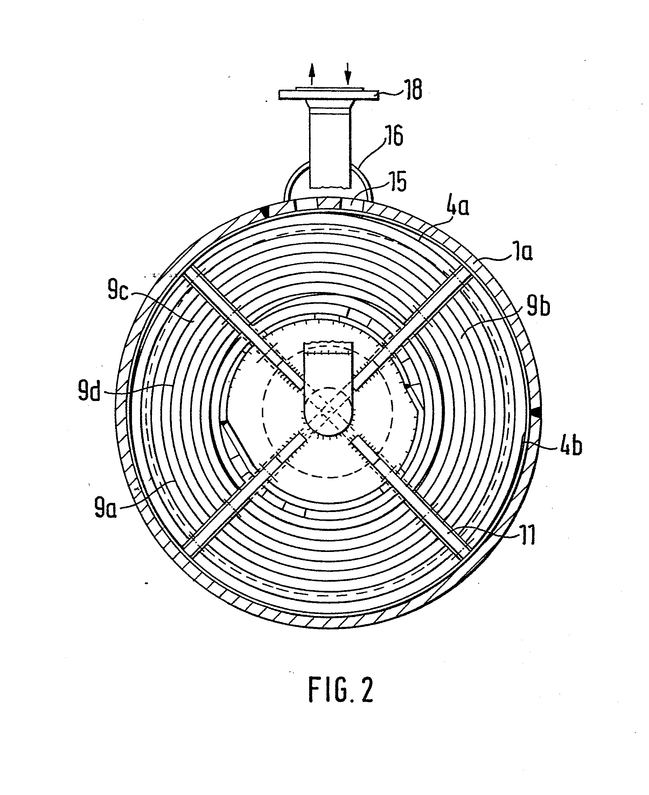

Fig. 1 zeigt einen druckfesten, zylindrischen Behälter 1, der an seinem unteren Ende einen Eintrittsflansch 2 und an seinem oberen Ende einen Austrittsflansch 3 für das Produkt aufweist. In seinem Inneren befindet sich ein Spiralwärmetauscher 4, der aus zwei Blechspiralen 4a und 4b besteht, die koaxial zu dem Behälter 1 angeordnet sind und zwei voneinander getrennte, spiralförmige Strömungskanäle 5 und 6 bilden. Der radial äußere Abschluß des Wärmetauschers 4 erfolgt durch den zylindrischen Wandteil 1a des Behälters 1, der innere Abschluß durch einen Innenzylinder 7 in Form eines an seinen Enden verschlossenen Rohres, wobei die Enden der Blechspiralen 4a und 4b gemäß Fig. 2 mit dem Außenzylinder 1a bzw. dem Innenzylinder 7 verschweißt sind.

Der axiale Abschluß erfolgt durch untere bzw. obere Abdeckbleche 8 bzw. 9. Sie decken die Stirnseiten jeweils einer Spirale 4a oder 4b ab.

Wie Fig. 2 zeigt, bestehen die Abdeckbleche 8 und 9 aus einzelnen Kreissektoren, von denen in Fig. 2 die oberen Sektoren 9a, 9b, 9c und 9d sichtbar sind. Sie liegen mit ihrem Außenrand an dem zylindrischen Außenmantel 1a des Behälters 1 an, während sie mit ihrem Innenrand auf dem unteren bzw. oberen Rohrabschluß 7a bzw. 7b des Rohres 7 aufliegen. An ihren radial verlaufenden Seitenkanten sind die einzelnen Segmente rechtwinklig hochgebogen und mit längs den Stoßstelle benachbarter Segmente verlaufenden Stützrippen 10 bzw. 11 verschraubt. Diese Stützrippen sind innen am unteren bzw. oberen Rohrabschluß 7a bzw. 7b, außen mit der Behälterwand 1 verschweißt.

Durch ihre segmentartige Ausbildung können die Abdeckbleche 8 oder 9 auf einfache Weise abgenommen werden, so daß die Strömungskanäle des Wärmetauschers 4 inspiziert und gereinigt werden können. Dazu ist der Behälter 1 entweder mit einem Mannloch versehen oder er weist einen abnehmbaren Boden oder Deckel auf wie in der Zeichnung dargestellt.

Wie Fig. 1 außerdem zeigt, sind die beiden Spiralen 4a und 4b axial etwas gegeneinander verschoben und an den Rändern unter Einlage jeweils eines spiralförmig verlaufenden Drahtes 12 bzw. 13 zur Bildung des axial hermetisch abgeschlossenen Strömungskanales 6 verschweißt. Der Strömungskanal 6 ist für die Durchströmung des Heiz- oder Kühlmediums vorgesehen. Er steht innen über Querbohrungen 14 mit dem Innenraum des Rohres 7, außen über Querbohrungen 15 in der Behälterwand 1 mit einem Sammler 16 in Verbindung. An das Rohr 7 ist oben eine den Behälter durchquerende Zuführleitung 17, an die Tasche 16 eine Austrittsleitung 18 angeschlossen, so daß das Heiz- oder Kühlmedium von innen spiralförmig nach außen den Wärmetauscher durchströmt.

Das Produkt wird über die Eintrittsöffnung 2 axial dem Wärmetauscher 4 zugeführt. Das untere Abdeckblech 8 weist jedoch nur am äußeren Umfang einen Spalt 8' auf, so daß das Produkt lediglich an den beiden außen liegenden Windungen des Strömungskanales 5 in den Wärmetauscher eintreten kann. Am gegenüberliegenden Ende des Wärmetauschers sind die Abdeckbleche 9 an ihrem inneren Ende mit einem in Umfangsrichtung laufenden Spalt 9' versehen. Das Produkt muß daher trotz seiner axialen Zu- und Abführung den Wärmetauscher in Umfangsrichtung durchströmen. Es fließt dabei im Gegenstrom zu dem über die Leitung 17 zugeführten Heiz- oder Kühlmedium, so daß optimale Wärmeübertragungsbedingungen vorliegen.

In Fig. 1 ist der Übersichtlichkeit wegen die Anzahl der Windungen stark reduziert worden. Tatsächlich liegen bei den gegebenen Abmessungen etwa 20 Windungen vor. Zieht man davon jeweils zwei Windungen für den Eintritt und den Austritt ab, so ergibt sich
über 16 Windungen, also über 80 % der Wärmetauscherfläche der angestrebte Gegenstrom.

**PATENTANWÄLTE**
## DIPL.-ING. R. LEMCKE
## DR.- ING. H. J. BROMMER
### AMALIENSTRASSE 28
### 7500 KARLSRUHE 1
TEL.: 0721 / 28778-9

CP51933
(13538/39) B

— 1 —

W. Schmidt GmbH & Co. KG
Pforzheimer Straße 46
7518 Bretten

Patentansprüche
================

1. Spiralwärmetauscher, insbesondere für unter hohem
Druck stehende Medien und für den Einbau in Reaktoren,
bestehend aus Blechspiralen, die zumindest zwei spiralförmige Strömungskanäle für die wärmetauschenden Medien
bilden und zwischen stirnseitigen, zumindest einseitig
abnehmbaren Abdeckblechen angeordnet sind, wobei die
Abdeckbleche über Stützrippen an die Blechspiralen angedrückt sind und an der einen bzw. der anderen Stirnseite axiale Ein- bzw. Austrittsöffnungen für das eine
Medium, insbesondere das Produkt aufweisen, während
das andere Medium, insbesondere das Heiz- oder Kühlmedium radial in seinen spiralförmigen Strömungskanal
ein- bzw. aus ihm abgeleitet wird,
dadurch gekennzeichnet, daß der zylindrische Außenmantel (1a) der Blechspiralen (4a, 4b) über die beiderseitigen Abdeckbleche (8, 9) radial nach innen gebogen ist und einen den Wärmetauscher (4) allseits umgebenden, druckfesten Behälter (1) bildet und daß das eine Abdeckblech (8) am radial äußeren Ende, das andere Abdeckblech (9) am radial inneren Ende des einen Strömungskanales (5) Ein- oder Austrittsöffnungen (8' bzw. 9') aufweist.

2. Spiralwärmetauscher nach Anspruch 1, dadurch gekennzeichnet, daß die beiden Blechspiralen (4a, 4b) nur an ihren radial äußeren und inneren Rändern an dem zylindrischen Außenmantel (1a) bzw. einem zylindrischen Innenmantel (7) verschweißt sind und im übrigen nur axial mit den beiden Abdeckblechen (8, 9) verklemmt sind.

3. Spiralwärmetauscher nach Anspruch 1 oder 2, dadurch gekennzeichnet, daß die beiden Blechspiralen (4a, 4b) zur Axialbegrenzung des einen Strömungskanales (6) an ihren gegenüberliegenden Rändern miteinander verbunden sind.

4. Spiralwärmetauscher nach Anspruch 3, dadurch gekennzeichnet, daß die gegenüberliegenden Ränder unter Zwischenlage zweier Drahtspiralen (12, 13) miteinander verschweißt sind.

5. Spiralwärmetauscher nach einem der vorhergehenden Ansprüche, dadurch gekennzeichnet, daß die Abdeckbleche (8;
9) jeweils aus in Umfangsrichtung aufeinanderfolgenden
Kreissektoren (9a, 9b, 9c, 9d) bestehen.

6. Spiralwärmetauscher nach Anspruch 5, dadurch gekennzeichnet, daß die Kreissektoren (9a, 9b, 9c, 9d) an
ihren radial verlaufenden Rändern hochgebogen und mit
den strahlenförmig angeordneten Stützrippen (11) verschraubt sind.

7. Spiralwärmetauscher nach Anspruch 6, dadurch gekennzeichnet, daß die Stützrippen (10, 11) mit dem zylindrischen Außenmantel des Behälters (1) und dem zylindrischen Innenmantel (7) verschweißt sind.

FIG.1

213

FIG. 2

FIG.3